# EUROPEAN PATENT APPLICATION

(11) **EP 2 530 370 A1**
(43) Date of publication of application: **05.12.2012**
(21) Application number: 10844651.9
(22) Date of filing: 28.09.2010
(51) Int. Cl.: F21S 2/00, F21V 23/00, H05B 37/02, F21Y 101/02

(54) **LIGHTING DEVICE AND DISPLAY DEVICE**

(30) Priority: 28.01.2010 JP 2010016339
(71) Applicant: Sharp Kabushiki Kaisha, Osaka-shi, Osaka 545-8522 (JP)
(72) Inventor: NOZAWA, Shinnosuke, Osaka-shi, Osaka 545-8522 (JP)
(74) Representative: Müller-Boré & Partner Patentanwälte
(86) International application number: PCT/JP2010/066777
(87) International publication number: WO 2011/092894

(57) **Abstract**

Disclosed is a lighting device capable of alleviating unevenness in luminosity upon a member that is being illuminated. A backlit device (lighting device) (10) comprises LEDs (11); a plurality of substrates (12) whereupon the LEDs are mounted; photodiodes (18) that are mounted upon the substrates; and a reflector sheet (13) that is positioned upon the substrates. The LEDs function as light sources for illumination, and transmit visible light signals to the photodiodes that are mounted adjacently thereto upon the substrates. The photodiodes receive the visible light signals from the LEDs that are mounted adjacently thereto upon the substrates.

## Description

### Technical Field

This invention relates to a lighting device and a display device, and specifically relates to a lighting device that is provided with a plurality of substrates on which light emitting devices are mounted, and a display device.

### Background Art

A backlight unit (a lighting device) provided with a substrate on which a light emitting device such as an LED (Light Emitting Diode) is mounted has been conventionally known. A method that is often used to improve brightness of a display panel (an illuminated member) by using such a backlight unit is to arrange a large number of substrates having light emitting devices mounted thereon.

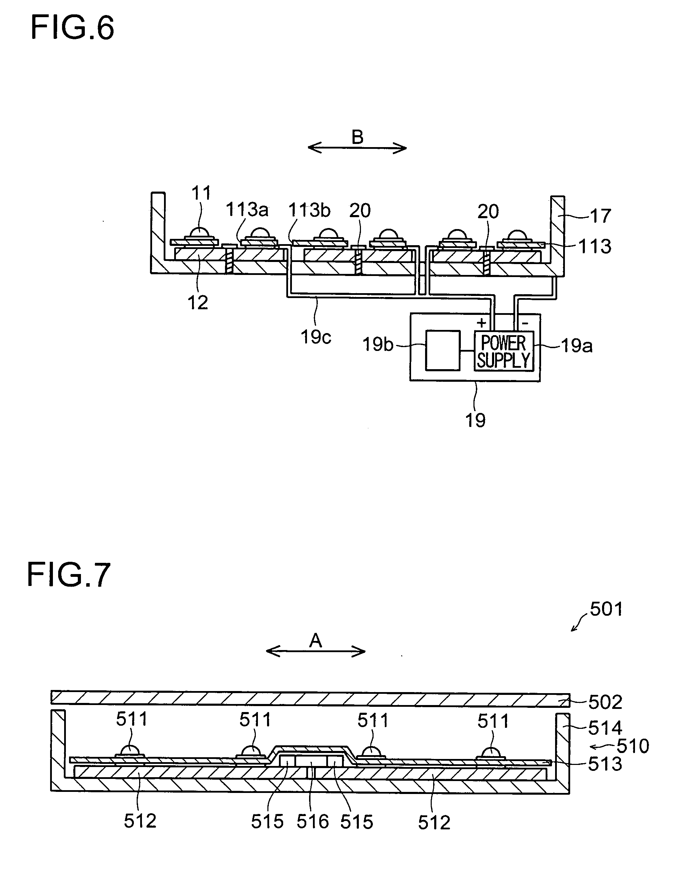

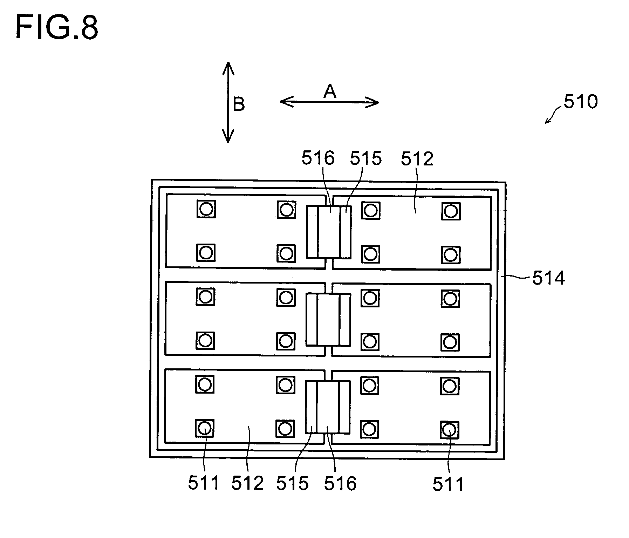

FIG. 7 is a sectional view illustrating a structure of a display device provided with a backlight unit (a lighting device) according to a conventional example that includes a plurality of substrates having an LED (a light emitting device) mounted thereon. FIG. 8 is a plan view of the backlight unit according to the conventional example illustrated in FIG. 7, excluding a reflection sheet (a reflection member).

As illustrated in FIG. 7, a display device 501 according to the conventional example is provided with a display panel (an illuminated member) 502 and a backlight unit (a lighting device) 510 which is disposed at a back surface side of the display panel 502.

As illustrated in FIG. 7 and FIG. 8, the backlight unit 510 is provided with a plurality of LEDs (light emitting devices) 511, a plurality of substrates 512 on which the plurality of LEDs 511 are mounted, a reflection sheet 513 (see FIG. 7) which is disposed above the plurality of substrates 512, and a chassis 514 which accommodates these components.

The LEDs 511 are configured to emit white light, and function as a light source of the backlight unit 510. The LEDs 511 are electrically connected to the substrates 512.

At an edge portion of each of the substrates 512 in a long-side direction (longitudinal direction, that is, a direction in which long sides of the substrates 512 extend) (direction A), connectors 515 for an FPC (Flexible Printed Circuit) are disposed. To the FPC connectors 515, an FPC 516 is attached, whereby adjacent substrates 512 are electrically connected to each other. This makes it possible to transmit (communicate) various kinds of information between adjacent substrates 512.

As illustrated in FIG. 7, the reflection sheet 513 has opening portions which are formed at portions thereof that correspond to positions of the LEDs 511, and through the opening portions, light emitting portions (hemisphere portions) of the LEDs 511 project to an upper side (the display panel 502 side). The reflection sheet 513 is also arranged to cover the FPC connectors 515 and the FPC 516.

The reflection sheet 513 has a function of reflecting, toward the display panel 502, light that is emitted from the LEDs 511 and reflected by, for example, the display panel 502.

An example of the backlight unit where adjacent substrates are connected by a wiring member such as an FPC is disclosed in Patent Literature 1.

### Citation List

### Patent Literature

Patent Literature 1 JP-A-2009-158193

### Summary of Invention

### Technical Problem

In the backlight unit 510 according to the conventional example illustrated in FIG. 7, since the reflection sheet 513 is arranged to cover the FPC connectors 515 and the FPC 516, the reflection sheet 513 rises up at portions thereof that correspond to positions of the FPC connectors 515 and the FPC 516. That is, the reflection sheet 513 warps. This results in uneven brightness in the display panel 502, which is disadvantageous.

Note that, even if an opening portion is formed in the reflection sheet 513 at a portion thereof that corresponds to a position of the FPC connectors 515 and the FPC 516 to thereby prevent the reflection sheet 513 from rising up (warping), brightness in the display panel 502 is lowered at a portion thereof corresponding to the FPC connectors 515 and the FPC 516 (that is, at a portion thereof above the opening portion formed in the reflection sheet 513), which results in uneven brightness in the display panel 502.

The present invention has been made to solve the above problems, and an object of the present invention is to provide a lighting device and a display device which are capable of reducing occurrence of uneven brightness in an illuminated member.

### Solution to Problem

To achieve the above object, according to a first aspect of the present invention, a lighting device includes a plurality of light emitting devices which emit at least visible light, a plurality of substrates on which the light emitting devices are mounted, a light receiving element which is mounted on the substrates and receives light, and a reflection member which is disposed above the substrates. Here, a first opening portion or a cut portion is provided in the reflection member at a portion thereof that corresponds to positions of the light emitting devices and the light receiving element, the light emitting devices not only function as a light source for illumination but also transmit a light signal to the light receiving element that is mounted on an adjacent one of the substrates, and the light receiving element receives the light signal from the light emitting devices that are mounted on an adjacent one of the substrates.

In the lighting device according to the first aspect, as described above, light emitting devices and a light receiving element are disposed on substrates, the light emitting devices are configured to transmit a light signal to the light receiving element that is mounted on an adjacent one of the substrates, and the light receiving element is configured to receive a light signal from the light emitting devices that are mounted on an adjacent one of the substrates. Furthermore, a first opening portion or a cut portion is provided in a reflection member at a portion thereof that corresponds to positions of the light emitting devices and the light receiving element. This facilitates transmission (communication) of various kinds of information between adjacent substrates (between the light emitting devices and the light receiving element). This eliminates the need of connecting adjacent substrates to each other by using an FPC and FPC connectors in order to achieve transmission (communication) of various kinds of information between adjacent substrates. Thus, in contrast to the case where adjacent substrates are connected to each other by using, for example, an FPC and FPC connectors, in the lighting device of the present invention, the reflection member does not rise up (warp) at a region thereof that corresponds to a position where an FPC and FPC connectors would be placed. As a result, it is possible to reduce occurrence of uneven brightness in an illuminated member (such as a display panel) that is illuminated by the light emitting devices.

Here, the light receiving element is sufficiently smaller than an FPC and FPC connectors, and thus, even if a first opening portion or a cut portion is provided in the reflection member at a portion thereof that corresponds to the position of the light receiving element, it is possible not only to sufficiently reduce reduction of brightness in the illuminated member at a portion thereof above the light receiving element (above the first opening portion or the cut portion), but also to reduce occurrence of uneven brightness in the illuminated member.

Furthermore, in the lighting device according to the first aspect, as described above, the light emitting devices not only function as a light source for illumination but also transmit a light signal to the light receiving element which is mounted on an adjacent one of the substrates. This eliminates the need of providing an extra light emitting device or the like for light signal transmission in order to transmit a light signal to the light receiving element which is mounted on an adjacent one of the substrates. This helps reduce increase in the number of components.

Moreover, if optical communication is performed between adjacent substrates as described above, it is possible not only to speed up communication between the substrates, but also to protect communication between the substrates from adverse effects of electromagnetic waves and the like generated in other circuits. In addition, since there is no need of connecting an FPC to FPC connectors, it is easy both to assemble the lighting device and to disassemble the lighting device for repair.

In the lighting device according to the first aspect, it is preferable that the light signal include a visible light signal. With this configuration, light emitting devices that are commonly used as a light source for illumination can be used, as they are, as light emitting devices for light signal transmission.

In the lighting device where the light signal includes a visible light signal, it is preferable that the light emitting devices are on-off driven at a frequency in a frequency range where it is impossible to visually recognize flickering of the light emitting devices to thereby transmit the visible light signal to the light receiving element mounted on an adjacent one of the substrates. With this configuration, it is possible to make the light emitting devices flicker at a frequency in a frequency range where it is impossible to visually recognize the flickering of the light emitting devices. Thus, thanks to persistence of vision, it is possible to prevent the illuminated member from undesirably appearing to be flickering.

It is preferable that the lighting device according to the first aspect further include a control portion which controls the light emitting devices, a control substrate on which the control portion is mounted, and a light emitting portion which is mounted on the control substrate, and that the light emitting portion transmit a light signal at least to part of the light receiving element. With this configuration, optical communication is able to be performed between the control substrate and the substrates (between the light emitting portion and the light receiving element), and the light emitting devices are able to be controlled easily by the control portion.

Furthermore, if optical communication is performed between the control substrate and the substrates, there is no need of connecting the control substrate and the substrates to each other by using an FPC and FPC connectors. Thus, in contrast to the case where the control substrate and the substrates are connected to each other by using, for example, an FPC and FPC connectors, the reflection member does not rise up (warp) at a region thereof that corresponds to a position where an FPC and FPC connectors would be placed. As a result, it is possible to further reduce occurrence of uneven brightness in the illuminated member.

Besides, if optical communication is performed between the control substrate and the substrates, it is possible not only to speed up communication between the control substrate and the substrates, but also to protect communication between the control substrate and the substrates from adverse effects of electromagnetic waves and the like generated in other circuits. In addition, since it is not necessary to connect an FPC and FPC connectors between the control substrate and the substrates, either, it is easy both to assemble the lighting device and to disassemble the lighting device for repair.

It is preferable that the lighting device provided with the control portion, the control substrate, and the light emitting portion further include a light receiving portion which is mounted on the control substrate, and that the light receiving portion receives a light signal from at least part of the light emitting devices. With this configuration, interactive optical communication is able to be performed between the control substrate and the substrates.

It is preferable that the lighting device provided with the control portion, the control substrate, and the light emitting portion further include a chassis which accommodates the plurality of light emitting devices and the plurality of substrates, that the control substrate is disposed outside the chassis, and that a second opening portion is provided in the chassis at a portion thereof that corresponds to a position of the light emitting portion. With this configuration, even in a case where the control substrate is disposed outside the chassis, optical communication is able to be performed between the control substrate and the substrates.

In the lighting device according to the first aspect, it is preferable that the light emitting devices include a light emitting diode. With this configuration, it is easy to obtain compact light emitting devices. In addition, semiconductor light emitting devices such as light emitting diodes respond to an on-off operation quickly (for example, as quickly as in 10 nsec or less), and thus, it is possible to on-off drive the light emitting devices easily at high speed.

In the lighting device where the light emitting devices include a light emitting diode, the light emitting devices may include a white light emitting diode.

In the lighting device where the light emitting devices include a light emitting diode, the light emitting devices may include a red light emitting diode element, a green light emitting diode element, and a blue light emitting diode element.

In the lighting device according to the first aspect, it is preferable that the light receiving element includes a photodiode. With this configuration, it is easy to obtain a compact light emitting element.

Preferably, the lighting device according to the first aspect further includes a power adjustment portion which adjusts an amount of power that is supplied to the light emitting devices. With this configuration, it is possible to adjust the amount of power that is supplied to the light emitting devices, and thus, to increase or decrease an amount of light emission of the light emitting devices.

The lighting device according to the first aspect may further include a brightness improving member which is disposed above the light emitting devices and improves the brightness of an illuminated member which is illuminated by the light emitting devices

The lighting device according to the first aspect may further include a light diffusion layer which is disposed above the light emitting devices and diffuses light that is emitted from the light emitting devices.

The lighting device according to the first aspect preferably functions as a backlight unit for illuminating a display panel. With this configuration, it is possible to obtain a lighting device (a backlight unit) that is capable of reducing occurrence of uneven brightness in the display panel.

According to a second aspect of the present invention, a display device is provided with a lighting device that functions as the above-described backlight unit for illuminating a display panel and a display panel that is illuminated by the lighting device. With this configuration, it is possible to obtain a display device that is capable of reducing occurrence of uneven brightness in a display panel.

### Advantageous Effects of Invention

As discussed hereinabove, according to the present invention, it is possible to easily obtain a lighting device and a display device that are capable of reducing occurrence of uneven brightness in an illuminated member.

### Brief Description of Drawings

FIG. 1 is an exploded perspective view illustrating a structure of a liquid crystal display device provided with a backlight unit (a lighting device) according to an embodiment of the present invention;
FIG. 2 is a plan view for describing a structure of the backlight unit according to the embodiment of the present invention illustrated in FIG. 1;
FIG. 3 is a sectional view for describing the structure of the backlight unit according to the embodiment of the present invention illustrated in FIG. 1;
FIG. 4 is a plan view illustrating a structure of a reflection sheet for the backlight unit according to the embodiment of the present invention illustrated in FIG. 1;
FIG. 5 is a sectional view for describing the structure of the backlight unit according to the embodiment of the present invention illustrated in FIG. 1;
FIG. 6 is a sectional view for describing a structure of a reflection sheet for a backlight unit according to a first modification example of the present invention;
FIG. 7 is a sectional view illustrating a structure of a display device according to a conventional example which includes a plurality of substrates having LEDs mounted thereon; and
FIG. 8 is a plan view illustrating the backlight unit according to the conventional example illustrated in FIG. 7, excluding a reflection sheet.

### Description of Embodiments

Embodiments of the present invention will be described below with reference to the accompanying drawings.

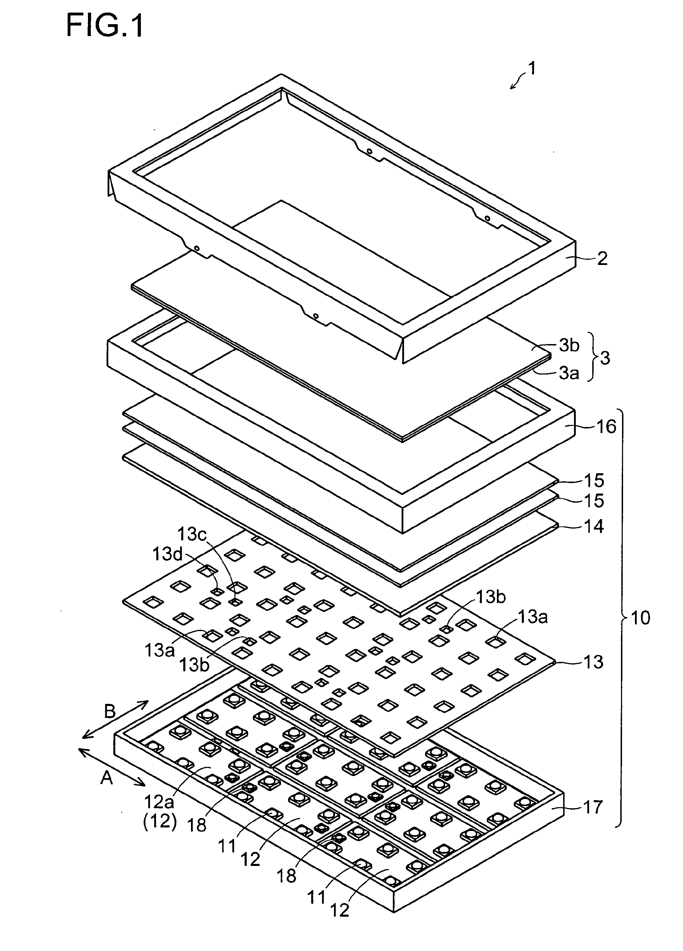

With reference to FIGS. 1 to 5, a description will be given of a liquid crystal display device 1 which is provided with a backlight unit 10 according to an embodiment of the present invention.

As shown in FIG. 1, the liquid crystal display device 1 provided with the backlight unit 10 according to the embodiment of the present invention is configured with a frame-like bezel 2, a liquid crystal display panel 3 whose edge portions are covered with the bezel 2, and the backlight unit 10 which is disposed at a back surface side of the liquid crystal display panel 3. The liquid crystal display device 1 is an example of a "display device" of the present invention, and the backlight unit 10 is an example of a "lighting device" of the present invention. The liquid crystal display panel 3 is an example of an "illuminated member" and a "display panel" of the present invention.

The liquid crystal display panel 3 includes an AM substrate (an active matrix substrate) 3a and a counter substrate 3b which is disposed facing the AM substrate 3a. Unillustrated liquid crystal is sealed between the AM substrate 3a and the counter substrate 3b. The liquid crystal display panel 3 functions as a display panel by being illuminated by the backlight unit 10.

The backlight unit 10 is provided with a plurality of LEDs 11, a plurality of substrates 12 on which the plurality of LEDs 11 are mounted, a reflection sheet 13 which is disposed above the plurality of substrates 12, a diffusion plate 14 and a plurality of optical sheets 15 which are arranged at a front surface side (an upper side) of the reflection sheet 13, and a front chassis 16 and a back chassis 17 which together accommodate these components. The LEDs 11 are an example of a "light emitting device", a "light emitting diode", and a "white light emitting diode" of the present invention, and the reflection sheet 13 is an example of a "reflection member" of the present invention. The diffusion plate 14 is an example of a "light diffusing layer" of the present invention, and the optical sheets 15 are an example of a "brightness improving member" of the present invention. The back chassis 17 is an example of a "chassis" of the present invention.

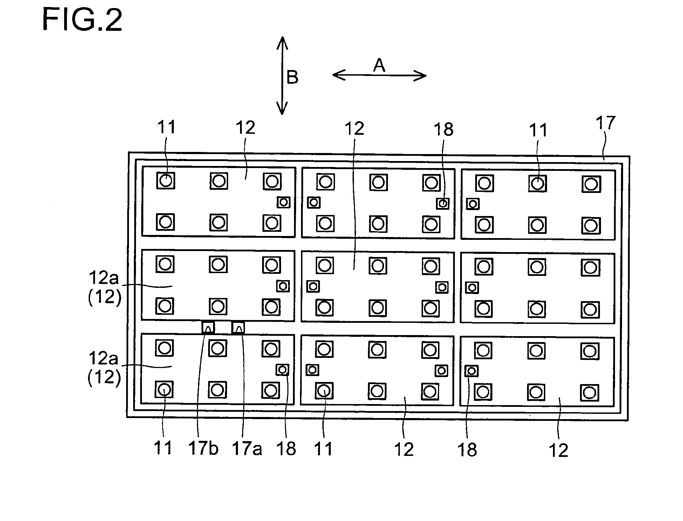

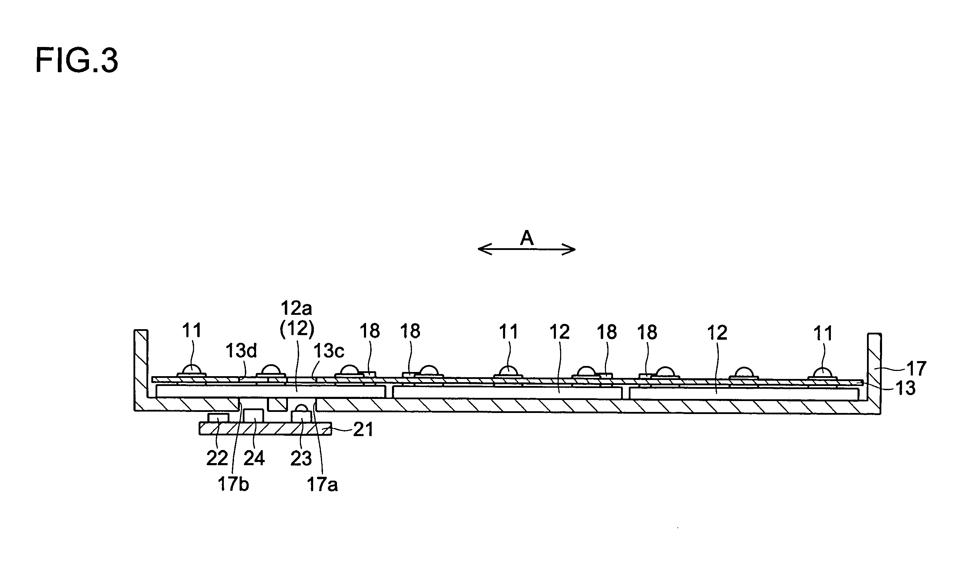

As illustrated in FIG. 1 and FIG. 2, the LEDs 11 are mounted on a front surface (an upper surface) of each of the substrates 12 such that three LEDs 11, for example, are arranged along direction A (a long-side direction of the substrates 12) and two LEDs 11, for example, are arranged along direction B (a short-side direction of the substrates 12, that is, a direction in which short sides of the substrates 12 extend). The LEDs 11 are electrically connected to the substrates 12. Also, as shown in FIG. 2 and FIG. 3, each of the LEDs 11 has a hemisphere-shaped lens portion. The lens portion has a function of outputting diffused light.

The LEDs 11 are each configured with, for example, a red light emitting diode element which emits red light, a green light emitting diode element which emits green light, and a blue light emitting diode element which emits blue light. With this configuration, white light is generated by mixing the red light, the green light, and the blue light and emitted from each of the LEDs 11. That is, the LEDs 11 are each a white light emitting diode which emits white light.

Here, in the present embodiment, the LEDs 11 are configured to be on-off driven at a frequency in a frequency range where it is impossible to visually recognize flickering of the LEDs 11. Light which the LEDs 11 emit by being on-off driven at such a frequency functions as a visible light signal, which is received by a photodiode 18 that is mounted on an adjacent substrate 12. The photodiode 18 will be described later. The visible light signal includes various kinds of information (such as brightness information, temperature information, and control information) which is transmitted (communicated) between, for example, the substrates 12.

The brightness information is, for example, information for increasing/decreasing an amount of light emission from each of the LEDs 11. Specifically, the brightness information is used for increasing current that is applied to the LEDs 11 that are located in an area where a bright image is displayed, to thereby increase an amount of light emission from such LEDs 11, while decreasing current applied to the LEDs 11 that are located in the other areas, to thereby decrease an amount of light emission from such LEDs 11 (or turn off such LEDs 11) in accordance with an image displayed on the liquid crystal display panel 3.

The temperature information is, for example, information that is obtained via an unillustrated temperature sensor disposed on the substrates 12. Specifically, the temperature information is information for detecting temperature at the substrates 12. It is used in reducing an amount of light emission from the LEDs 11 that are mounted on a substrate 12 where temperature is high, to thereby reduce heat generation attributable to the LEDs 11.

The control information is, for example, information for controlling flickering (on/off) intervals of the LEDs 11.

Note that the frequency (a carrier frequency) at which the LEDs 11 are on-off driven is able to be set to, for example, approximately 28.8 kHz, but this is not a limitation and any frequency may be adopted as long as flickering of the LEDs 11 cannot be recognized.

By a visible light signal from an adjacent substrate 12 or from a later-described control substrate 21, the LEDs 11 are on-off driven at a frequency in the above-described frequency range.

Note that the LEDs 11 may be configured such that just one of the red light, the green light, and the blue light functions as a visible light signal, or may be configured such that two or three of the red light, the green light, and the blue light function as visible light signals.

That is, the LEDs 11 may be configured such that just one of the red light emitting diode element, the green light emitting diode element, and the blue light emitting diode element is on-off driven at a frequency in the above-described frequency range, or may be configured such that two or three of the red light emitting diode element, the green light emitting diode element, and the blue light emitting diode element are on-off driven at a frequency in the above-described frequency range.

Furthermore, all the brightness information, the temperature information, and the control information, for example, may be included in just one of the red light, the green light, and the blue light; alternatively, the brightness information, the temperature information, and the control information, for example, may be included in the red light, the green light, or the blue light, on a one-to-one basis.

Thus, in the present embodiment, the LEDs 11 are configured such that they function as a light source for illumination and such that they transmit visible light signals to a photodiode 18 that is mounted on an adjacent substrate 12.

As illustrated in FIG. 1 and FIG. 2, three substrates 12, for example, are arranged along both direction A and direction B.

One or two photodiodes 18 are mounted on the front surface (the upper surface) of each of the substrates 12. The photodiodes 18 are electrically connected to the substrates 12. The photodiodes 18 have an external shape that is smaller than that of the LEDs 11 in plan view. The photodiodes 18 are an example of a "light receiving element" of the present invention.

The photodiodes 18 are disposed at edge portions of the substrates 12 in direction A, the edge portions each facing a substrate 12 that is adjacent in direction A.

Furthermore, in the present embodiment, the photodiodes 18 are each configured to receive visible light signals from the LEDs 11 that are mounted on an adjacent one of the substrates 12. This configuration makes it possible to transmit (communicate) various kinds of information (such as the brightness information, the temperature information, and the control information) between adjacent ones of the substrates 12.

Thus, according to the present embodiment, the backlight unit 10 is configured such that adjacent substrates 12 communicate with each other by using visible light.

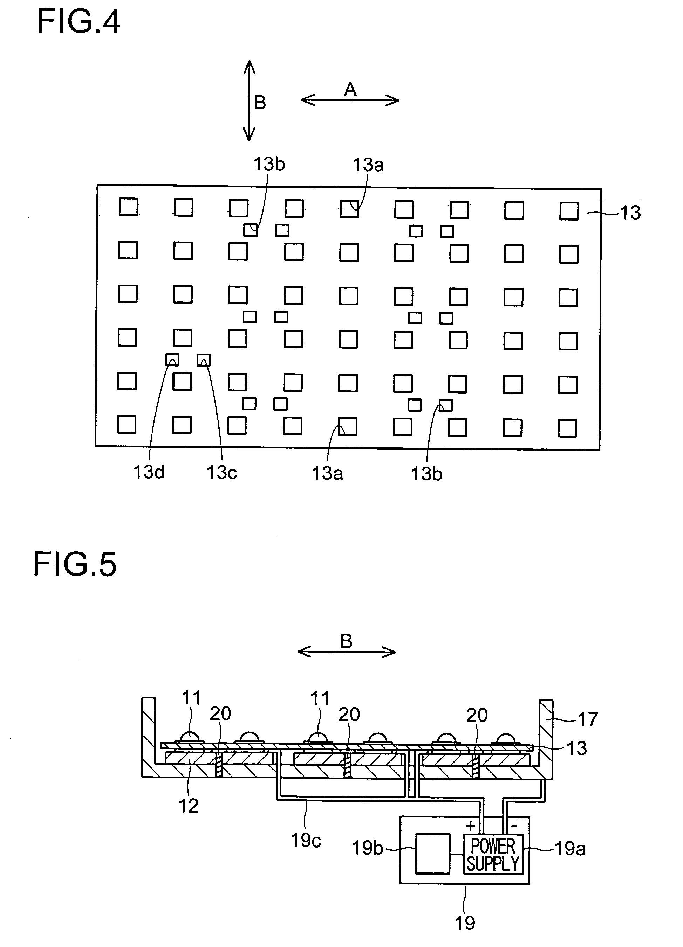

As shown in FIG. 1 and FIG. 4, the reflection sheet 13 has opening portions 13a, 13b, 13c, and 13d which are formed at portions thereof that correspond to positions of the LEDs 11, the photodiodes 18, a later-described LED 23 (see FIG. 3), and a later-described photodiode 24 (see FIG. 3), respectively. Through the opening portions 13a and 13b, the LEDs 11 and the photodiodes 18 project upward (to the liquid crystal display panel 3 side). The opening portions 13a and 13b are an example of a "first opening portion" of the present invention, and the opening portion 13c is an example of a "second opening portion" of the present invention.

As shown in FIG. 1, the diffusion plate 14 has a function of diffusing light from the LEDs 11 and the later-described LED 23. Furthermore, the diffusion plate 14 also has a function of reflecting part of light (visible light signals) from the LEDs 11 and the LED 23 in a downward direction (to the photodiodes 18 and the later-described photodiode 24 side).

The plurality of optical sheets 15 include, for example, a DBEF (a brand name) which is a product of Sumitomo 3M Limited, a microlens sheet, various kinds of prism sheets, and the like; the optical sheets 15 function to concentrate light that has passed through the diffusion plate 14 within a predetermined viewing angle, to thereby improve the brightness of the liquid crystal display panel 3.

The back chassis 17 is made of metal. Furthermore, as shown in FIG. 5, a negative electrode of a power supply 19a is electrically connected to the back chassis 17. The power supply 19a is mounted on a power supply substrate 19 which is disposed outside the back chassis 17.

A control portion 19b is also mounted on the power supply substrate 19. The control portion 19b controls the power supply 19a. The control portion 19b has a function of adjusting an amount of power that is supplied to the LEDs 11. Note that the power supply board 19 may be electrically connected to the control substrate 21 which will be described layer, and the power supply substrate 19 and the control substrate 21 may be integrally configured. The function of the control portion 19b may be incorporated in a control portion 22 which will be described layer. The control portion 19b is an example of a "power adjustment portion" of the present invention.

Furthermore, to the back chassis 17, the substrates 12 are fixed by using electroconductive screws 20. The screws 20 electrically connect unillustrated negative electrode conductors (or ground conductors) of the substrates 12 to the back chassis 17. Moreover, a positive electrode of the power supply 19a is electrically connected to positive electrode conductors of the substrates 12 by using, for example, a conductor 19c. With this configuration, current flows along a path from the positive electrode of the power supply 19a, through the positive conductors of the substrates 12, the LEDs 11, the negative conductors (the ground conductors) of the substrates 12, the screws 20, and the back chassis 17, and to the negative electrode of the power supply 19a.

Furthermore, as shown in FIG. 3, the control substrate 21 is disposed at the back surface side (outside) of the back chassis 17. On the control substrate 21, the LED 23, the photodiode 24, and the control portion 22, which controls the LEDs 11, are mounted. The LED 23 is an example of a "light emitting portion" of the present invention, and the photodiode 24 is an example of a "light receiving portion" of the present invention.

The back chassis 17 has opening portions 17a and 17b which are formed at portions thereof that correspond to positions of the LED 23 and the photodiode 24, respectively.

The control portion 22 is configured to supply control signals to the LED 23 to on-off drive the LED 23 at a frequency in a frequency range where it is impossible to visually recognize flickering of the LED 23.

The LED 23 is configured to be on-off driven at a frequency of, for example, approximately 28.8 kHz by the control signals received from the control portion 22. Light from the LED 23 functions as a visible light signal, which is received by a photodiode 18 that is mounted on a substrate 12a (see FIG. 2 and FIG. 3) which is disposed in the vicinity of the control substrate 21. The visible light signal here includes various kinds of information (such as brightness information, temperature information, and control information) that is transmitted (communicated), for example, between the control substrate 21 and the substrates 12.

Like the LEDs 11, the LED 23 may be configured with, for example, a red light emitting diode element which emits red light, a green light emitting diode element which emits green light, and a blue light emitting diode element which emits blue light. Alternatively, the LED 23 may have a different configuration from the above-described LEDs 11, that is, the LED 23 may be configured with any one of a red light emitting diode element, a green light emitting diode element, and a blue light emitting diode element.

The photodiode 24 is configured to receive visible light signals from the LEDs 11 mounted on the substrate 12a (see FIG. 2 and FIG. 3) which is disposed in the vicinity of the control substrate 21. The photodiode 24 is also configured to convert the received visible light signals into electric signals, and input the resulting electric signals to the control portion 22. With this configuration, it is possible to transmit (communicate) various kinds of information (such as brightness information, temperature information, and control information) between the control substrate 21 and the substrates 12.

Thus, the backlight unit 10 is configured such that optical communication is also performed between the substrates 12 and the control substrate 21.

According to the present embodiment, as described above, the LEDs 11 are configured to transmit visible light signals to a photodiode 18 that is mounted on an adjacent substrate 12, and the photodiodes 18 are configured to receive the visible light signals from the LEDs 11 that is mounted on an adjacent substrate 12. The reflection sheet 13 has the opening portions 13a and 13b which are formed at portions thereof that correspond to the positions of the LEDs 11 and the photodiodes 18, respectively. This configuration facilitates transmission (communication) of various kinds of information between adjacent substrates 12 (between the LEDs 11 and the photodiodes 18). Thus, it is not necessary to connect adjacent substrates 12 by using an FPC and FPC connectors to achieve transmission (communication) of various kinds of information between adjacent substrates 12. With this configuration, in contrast to a configuration where adjacent substrates 12 are connected to each other by using an FPC and FPC connectors, the reflection sheet 13 does not rise up (warp) at a region thereof that corresponds to a position where an FPC and FPC connectors would be placed. As a result, it is possible to reduce occurrence of uneven brightness in the liquid crystal display panel 3.

Since the photodiodes 18 are sufficiently smaller than the FPCs and the FPC connectors, even with the opening portions 13b provided in the reflection sheet 13 at portions thereof that correspond to the positions of the photodiodes 18, it is possible to sufficiently reduce reduction of brightness in the liquid crystal display panel 3 at portions thereof above the photodiodes 18 (above the opening portions 13b of the reflection sheet 13), and also, to reduce occurrence of uneven brightness in the liquid crystal display panel 3.

According to the present embodiment, as described above, the LEDs 11 not only function as a light source for illumination, but also transmit visible light signals to a photodiode 18 mounted on an adjacent substrate 12 by having the visible light signals reflected by, for example, the diffusion plate 14. With this configuration, it is not necessary to provide an extra LED for optical signal transmission in order to transmit visible light signals to a photodiode 18 mounted on an adjacent substrate 12. This helps reduce increase in number of components.

Furthermore, as described above, optical communication between adjacent substrates 12 makes it possible not only to speed up communication between the substrates 12 but also to protect communication between the substrates 12 from adverse effects of, for example, electromagnetic waves generated in other circuits (not shown). Moreover, since there is no need of connecting an FPC to FPC connectors, it is easy both to assemble the backlight unit 10 and to disassemble the backlight unit 10 for repair.

Optical communication generates no electric field or no magnetic field at all, and thus, in contrast to a case where another kind of wireless communication is performed instead of optical communication, it is possible to prevent other electric circuits from being affected by communication between adjacent substrates 12.

According to the present embodiment, as described above, optical communication performed by using visible light signals makes it possible for the LEDs 11, which are typical LEDs used as a light source for illumination, to be used as LEDs for transmitting light signals as they are.

Furthermore, optical communication performed by using visible light makes it possible to visually check whether the LEDs 11 are emitting light or not. Thus, in contrast to a case where communication is performed by using, for example, an FPC, it is possible to visually check at least whether or not the LEDs 11 are outputting (transmitting) information. Furthermore, visible light has a frequency between approximately 400 THz and approximately 800 THz, which is not covered by the Radio Law, and thus the present invention is out of regulation of the Radio Law. Moreover, while electric waves can travel over a shield, visible light never travels over a shield. Thus, in visible light communication, leakage of communication contents is able to be prevented simply by providing shielding.

Furthermore, according to the present embodiment, as described above, flickering of the LEDs 11 at a frequency in a frequency range where flickering of the LEDs 11 is not visually recognizable is able to be achieved by on-off driving the LEDs 11 in a frequency range where it is impossible to visually recognize flickering of the LEDs 11. Thus, persistence of vision prevents the liquid crystal display panel 3 from appearing to be flickering.

Moreover, according to the present embodiment, as described above, optical communication between the control substrate 21 and the substrates 12 eliminates the need of connecting the control substrate 21 to the substrates 12 by using an FPC and FPC connectors. Thus, in contrast to a case where the control substrate 21 is connected to the substrates 12 by using an FPC and FPC connectors, the reflection sheet 13 does not rise up (warp) at a region thereof that corresponds to a position where an FPC and FPC connectors would be placed. As a result, it is possible to reduce occurrence of uneven brightness in the liquid crystal display panel 3.

In addition, optical communication between the control substrate 21 and the substrates 12 makes it possible not only to speed up communication between the control substrate 21 and the substrates 12, but also to protect communication between the control substrate 21 and the substrates 12 from adverse effects of, for example, electromagnetic waves generated in other circuits (not shown). In addition, it is not necessary to connect an FPC to FPC connectors between the control substrate 21 and the substrates 12, either, and this makes it easier to assemble the backlight unit 10 and disassemble the backlight unit 10 for repair.

Furthermore, according to the present embodiment, as described above, the photodiode 24 is configured to receive visible light signals from the LEDs 11 mounted on the substrate 12a which is disposed in the vicinity of the control substrate 21, and thereby, it is possible to perform interactive optical communication between the control substrate 21 and the substrates 12.

Moreover, according to the present embodiment, as described above, the LEDs 11 (light emitting diodes) are used as light emitting devices for optical communication between the substrates 12, and thereby, it is possible to easily achieve a compact light emitting device for optical communication. Furthermore, semiconductor light emitting devices such as the LEDs 11 respond to an on-off operation quickly (for example, as quick as in 10 nsec or less), and thus, it is possible to on-off drive the light emitting devices easily at high speed.

The above embodiments disclosed herein are to be considered in all respects as illustrative, and not restrictive of the invention. The scope of the present invention is set out in the appended claims and not in the description of the embodiments hereinabove, and includes any variations and modifications within the sense and scope equivalent to those of the claims.

For example, the above embodiments deal with cases where the display panel and the display device of the present invention are applied to a liquid crystal display panel and a liquid crystal display device, respectively, but this is not meant to limit the present invention, and they may be respectively applied to a display panel and a display device other than a liquid crystal display panel and a liquid crystal display device, respectively.

Furthermore, the above embodiments describe an example where the lighting device of the present invention is used as a backlight unit, but this is not meant to limit the present invention, and, the lighting device may be used as a lighting device such as a room illumination device, instead of a backlight unit.

Moreover, the above embodiments describe an example where an LED is used as a light emitting device, but this is not meant to limit the present invention, and a light emitting device other than an LED may be used.

Furthermore, the above embodiments describe an example where a photodiode is used as a light receiving element, but this is not meant to limit the present invention, and a light receiving element other than a photodiode may be used.

Moreover, the above embodiments describe an example where an LED is configured with a red light emitting diode element, a green light emitting diode element, and a blue light emitting diode element, but this is not meant to limit the present invention, and an LED may be configured with, for example, a blue light emitting diode element and a fluorescent substance that converts part of blue light, which is emitted from the blue light emitting diode element, into yellow light.

Furthermore, for example, there may be provided an LED that is configured with a red light emitting diode element, an LED that is configured with a green light emitting diode element, and an LED that is configured with a blue light emitting diode element in such a manner that the three kinds of LEDs are mounted on a substrate.

Moreover, the above embodiments describe an example where optical communication is performed between adjacent substrates by using visible light, but this is not meant to limit the present invention, and optical communication between adjacent substrates may be performed by using, for example, invisible light such as infrared light and ultraviolet light. In this case, an LED mounted on a substrate is provided with an infrared light emitting diode element, an ultraviolet light emitting diode element, and the like in addition to a red light emitting diode element, a green light emitting diode element, and a blue light emitting diode element.

Furthermore, the above embodiments describe an example having a configuration where optical communication is also performed between a substrate and a control substrate, but this is not meant to limit the present invention, and communication between a substrate and a control substrate may be performed by using, for example, an FPC and FPC connectors.

Moreover, the above embodiments describe an example where optical communication is also performed between a substrate and a control substrate by using visible light, but this is not meant to limit the present invention, and optical communication between a substrate and a control substrate may be performed by using, for example, invisible light such as infrared light and ultraviolet light. In this case, an LED mounted on a control substrate may be configured with an infrared light emitting diode element and an ultraviolet light emitting diode element.

Furthermore, the above embodiments describe an example where opening portions are provided in a reflection sheet at portions thereof that correspond to the positions of LEDs 11 and photodiodes 18, but this is not meant to limit the present invention, and, in a case where LEDs 11 and photodiodes 18 are located at positions corresponding to an edge portion of the reflection sheet, cut portions may be provided in the reflection sheet.

Moreover, the above embodiments describe an example where, as shown in FIG. 4 and FIG. 5, no opening portion is provided in a reflection sheet at portions thereof that correspond to the positions of screws and conductors, but this is not meant to limit the present invention, and as shown in FIG. 6 illustrating a first modified example of the present invention, opening portions 113a and 113b may be provided in a reflection sheet 113 at portions thereof that correspond to the positions of screws 20 and a conductor 19c, respectively.

Furthermore, the above embodiments describe an example wher a control substrate is disposed at a back surface side of a back chassis, but this is not meant to limit the present invention, and a control substrate may be disposed outside of a side surface of a back chassis. In this case, there is no need of providing opening portions 13c and 13d in a reflection sheet 13.

Moreover, the above embodiments describe an example where an LED, a photodiode, and a control portion is mounted on a control substrate, but this is not meant to limit the present invention, and merely an LED and a control portion may be mounted on a control substrate.

Furthermore, the above embodiments describe an example where a diffusion plate is used as a light diffusing layer, but this is not meant to limit the present invention, and a diffusion sheet may be used as a light diffusing layer.

### List of Reference Symbols

- 1: liquid crystal display device (display device)
- 3: liquid crystal display panel (illuminated member, display panel)
- 10: backlight unit (lighting device)
- 11: LED (light emitting device, light emitting diode, white light emitting diode)
- 12: substrate
- 13, 113: reflection sheet (reflection member)
- 13a, 13b: opening portion (first opening portion)
- 13c: opening portion (second opening portion)
- 14: diffusion plate (light diffusing layer)
- 15: optical sheet (brightness improving member)
- 17: back chassis (chassis)
- 18: photodiode (light receiving element)
- 19b: control portion (electricity adjustment portion)
- 21: control substrate
- 22: control portion
- 23: LED (light emitting portion)
- 24: photodiode (light receiving portion)

## Claims

1. A lighting device, comprising:
a plurality of light emitting devices which emit at least visible light;
a plurality of substrates on which the light emitting devices are mounted;
a light receiving element which is mounted on the substrates and receives light; and
a reflection member which is disposed above the substrates,
wherein
a first opening portion or a cut portion is provided in the reflection member at a portion thereof that corresponds to positions of the light emitting devices and the light receiving element;
the light emitting devices not only function as a light source for illumination but also transmit a light signal to the light receiving element that is mounted on an adjacent one of the substrates; and
the light receiving element receives the light signal from the light emitting devices that are mounted on an adjacent one of the substrates.

2. The lighting device according to claim 1,
wherein
the light signal includes a visible light signal.

3. The lighting device according to claim 2,
wherein
the light emitting devices are on-off driven at a frequency in a frequency range where it is impossible to visually recognize flickering of the light emitting devices, to thereby transmit the visible light signal to the light receiving element that is mounted on the adjacent one of the substrates.

4. The lighting device according to any one of claims 1 to 3, further comprising:
a control portion which controls the light emitting devices;
a control substrate on which the control portion is mounted; and
a light emitting portion which is mounted on the control substrate,
wherein
the light emitting portion transmits a light signal at least to part of the light receiving element.

5. The lighting device according to claim 4, further comprising
a light receiving portion which is mounted on the control substrate,
wherein
the light receiving portion receives a light signal from at least part of the light emitting devices.

6. The lighting device according to claim 4 or 5, further comprising
a chassis which accommodates the plurality of light emitting devices and the plurality of substrates,
wherein
the control substrate is disposed outside the chassis; and
a second opening portion is provided in the chassis at a portion thereof that corresponds to a position of the light emitting portion.

7. The lighting device according to any one of claims 1 to 6,
wherein
the light emitting devices include a light emitting diode.

8. The lighting device according to claim 7,
wherein
the light emitting devices include a white light emitting diode.

9. The lighting device according to claim 7 or 8,
wherein
the light emitting devices include a red light emitting diode element, a green light emitting diode element, and a blue light emitting diode element.

10. The lighting device according to any one of claims 1 to 9,
wherein
the light receiving element includes a photodiode.

11. The lighting device according to any one of claims 1 to 10, further comprising
a power adjustment portion which adjusts an amount of power that is supplied to the light emitting devices.

12. The lighting device according to any one of claims 1 to 11, further comprising
a brightness improving member which is disposed above the light emitting devices and improves brightness of an illuminated member that is illuminated by the light emitting devices.

13. The lighting device according to any one of claims 1 to 12, further comprising
a light diffusing layer which is disposed above the light emitting devices and diffuses light that is emitted from the light emitting devices.

14. The lighting device according to any one of claims 1 to 13,
wherein
the lighting device functions as a backlight unit for illuminating a display panel.

15. A display device, comprising:
the lighting device according to claim 14; and
a display panel that is illuminated by the lighting device.
